(19) Europäisches Patentamt
European Patent Office
Office européen des brevets

(11) EP 2 227 437 B1

(12) **FASCICULE DE BREVET EUROPEEN**

(45) Date de publication et mention de la délivrance du brevet:
**19.03.2014 Bulletin 2014/12**

(21) Numéro de dépôt: **08868783.5**

(22) Date de dépôt: **18.12.2008**

(51) Int Cl.:
*C08F 36/04* (2006.01) *C08F 4/54* (2006.01)
*B01J 31/18* (2006.01) *C01F 17/00* (2006.01)

(86) Numéro de dépôt international:
**PCT/EP2008/067920**

(87) Numéro de publication internationale:
**WO 2009/083480 (09.07.2009 Gazette 2009/28)**

(54) **PROCÉDÉ DE SYNTHÈSE D'UN ORGANOPHOSPHATE DE TERRE RARE ET SON UTILISATION POUR LA PRÉPARATION D'UN SYSTÈME CATALYTIQUE 'PRÉFORMÉ'**

VERFAHREN ZUR SYNTHESE EINES SELTENERDORGANOPHOSPHATS UND VERWENDUNG ZUR HERSTELLUNG EINES VORGEFORMTEN KATALYSATORSYSTEMS

METHOD FOR THE SYNTHESIS OF A RARE-EARTH ORGANOPHOSPHATE AND USE THEREOF FOR PREPARING A PREFORMED CATALYTIC SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.12.2007 FR 0708913**

(43) Date de publication de la demande:
**15.09.2010 Bulletin 2010/37**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeur: **THUILLIEZ, Julien**
**F-63100 Clermont-Ferrand (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A- 0 924 214** **WO-A-00/64910**
**WO-A-02/38636** **DE-A1- 1 938 883**

- **FRIEBE, NUYKEN, OBRECHT: "Neodymium based Ziegler/Natta Catalysts and their Application in Diene Polymerization" ADV. POLYM. SCI., vol. 204, 5 juillet 2006 (2006-07-05), pages 1-154, XP002491130**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un procédé de préparation d'un organophosphate de terre rare sous forme d'un gel utilisable tel quel dans un système catalytique destiné notamment à la polymérisation stéréospécifique 1,4-cis des diènes conjugués.

Dans les années 1980, les premiers systèmes catalytiques à base de terre rare ont vu le jour et leur intérêt a été grandissant, d'une part en raison de la non-toxicité du métal et d'autre part en raison du fait que des solvants non-aromatiques, tels que l'hexane, le cyclohexane, les coupes d'isomères de l'hexane ou le méthylcyclohexane sont utilisables comme solvant de polymérisation. Plus particulièrement, la catalyse au néodyme connaît actuellement un véritable essor.

Les catalyseurs de terre rare sont multi-composants et sont généralement constitués d'au moins :

- un monomère diène conjugué,
- un sel d'un ou plusieurs métaux de terre rare d'un acide phosphorique organique ou d'un acide carboxylique organique,
- un agent d'alkylation constitué d'un alkylaluminium répondant à la formule $AlR_3$ ou $HAlR_2$, et
- un donneur d'halogène constitué d'un halogénure d'alkylaluminium,

Ce type de catalyseur est notamment décrit dans les demandes de brevet internationales WO 02/38635, WO02/38636 et WO 03/097708 au nom des Demanderesses.

Parmi les sels de terre rare, les sels appelés phosphates de terre rare et de formule générale $Ln[OP(=O)_x(OR)_{3-x}]_3$ (Ln étant un métal de la famille des lanthanides, le scandium ou l'yttrium, x étant égal à 1 ou 2, R étant des radicaux alkyle aliphatiques ou alicycliques, comprenant 1 à 20 atomes de carbone, linéaires ou ramifiés, identiques ou différents) sont des composés significatifs pour la préparation de systèmes catalytiques très actifs pour la polymérisation stéréospécifique 1,4-cis des diènes conjugués, plus particulièrement le butadiène et l'isoprène. Ces systèmes présentent l'avantage de conduire à des élastomères ayant une distribution de masse molaire étroite.

De par leur nature, ces sels sont peu solubles et ont une forte tendance à s'associer en milieu solvant hydrocarboné et conduisent généralement à la formation de gel, comme décrit par Suglobov dans le document "DEHP Complexes of Lanthanides (III) and Actinides (III)", Journal of Alloys and Compounds, 213/214, 1994, p 523-527). Cela entraîne des difficultés pratiques, que ce soit lors de leur synthèse ou de leur utilisation comme précurseur de catalyseur de polymérisation.

Plusieurs méthodes de synthèse sont décrites dans la littérature. La plupart consiste en la réaction d'un sel de terres rares de type halogénure ou nitrate de terres rares avec un sel organophosphate (Korovin et al., Russian Journal of Inorganic Chemistry, 22(5), 1977 ; Chen Tien et al. "Preparation and characterization of bis(2-ethylhexyl) phosphate (P204) rare earth", K'o Hsueh T'ung Pao 1981, 26(13), 794-6 ; JP 60023406 au nom de Asahi, page 4).

Le document de brevet EP 1 509 557 B1 au nom des Demanderesses décrit la synthèse d'une poudre de tris (organophosphate) de néodyme $[(RO)_2P(=O)O]_3Nd$ par réaction de :

a) une solution aqueuse de chlorure de néodyme $NdCl_3(H_2O)_6$, préparé par réaction d'HCl avec du $Nd_2O_3$, et
b) une solution eau/acétone de di(2-éthyl-hexyl)phosphate de sodium.

Ce procédé de synthèse en plusieurs étapes permet une réaction totale et conduit à la formation du sel tris[di (2-éthyl-hexyl phosphate)] de néodyme sous la forme d'un solide. Après un certain nombre de lavage de ce solide par de l'eau, le test qualitatif de détermination des ions chlorures est quasi-négatif, ce qui traduit l'obtention d'un produit quasi pur. Une fois sec, le produit se présente sous la forme d'une poudre rose-mauve.

Le document de brevet US 6,767,927 B1 décrit un procédé de synthèse en trois étapes d'une solution stable de tris(organophosphate) de terre rare dans un solvant hydrocarboné :

1) préparation d'un sel organophosphate par réaction de l'acide correspondant et d'une base,
2) réaction de l'organophosphate obtenu précédemment avec un sel de terre rare,
3) ajustement de la concentration en acide libre.

Cette synthèse est réalisée en milieu biphasique eau/solvant hydrocarboné. En fin de réaction, l'eau est éliminée par décantation et distillation azéotropique. Le produit de ce procédé de synthèse est une solution fluide utilisable directement pour la préparation de catalyseur de polymérisation. Néanmoins, le procédé comporte un certain nombre d'étapes de synthèse pour aboutir à la solution recherchée. Ce procédé génère par ailleurs des effluents aqueux contenant des ions, par exemple du nitrate d'ammonium, ce qui du point de vue environnemental nécessite une étape supplémentaire de traitement ultérieur de ces rejets.

Les procédés de synthèse précédents peuvent être définis comme étant des procédés par voie indirecte. C'est-à-dire que la synthèse du sel de phosphate de terre rare s'effectue à partir d'un sel de terre rare, obtenu par réaction de l'oxyde de terre rare et d'un acide, et d'un sel organophosphate, obtenu par réaction de l'acide correspondant et d'une base. Le nombre d'étapes fait généralement de ce type de procédé des voies de synthèse complexes et peu économiques. Un inconvénient de ces procédés est qu'ils génèrent des rejets aqueux, ce qui nécessite d'introduire une étape supplémentaire de traitement de ces rejets.

Les tris(carboxylates) de terres rares, comme par exemple les versatates de terres rares, sont des composés eux aussi utilisables comme précurseur dans la synthèse de catalyseurs pour la polymérisation stéréospécifique 1,4-cis. Leur synthèse est possible selon la même voie que précédemment, c'est-à-dire par réaction d'un sel de carboxylate avec un sel de terre rare (par exemple, réaction du versatate de sodium avec du nitrate de néodyme tel que décrit dans le document de brevet US 6,111,082).

Des voies de synthèses alternatives ont été développées pour la synthèse de sels organométalliques de cette famille afin de diminuer le coût de la synthèse en limitant le nombre d'étapes. Dans ces synthèses, le sel carboxylate ou le sel de terre rare est remplacé par leur précurseur, c'est-à-dire l'acide carboxylique correspondant ou l'oxyde de terre rare correspondant.

Le document de brevet US 6,482,906 B1 décrit un procédé de préparation de tris(néodécanoate) de néodyme, encore appelé tris(versatate) de néodyme, en quatre étapes :

1) préparation d'une boue par dispersion de $Nd_2O_3$ dans un solvant hydrocarboné et réaction avec un défaut d'HCl par rapport au néodyme,
2) ajout d'acide néodécanoïque à hauteur de 3,25 équivalents par rapport au néodyme,
3) décantation du milieu réactionnel,
4) séparation du tris(néodécanoate) de néodyme des réactifs résiduels.

Cette voie de synthèse présente l'intérêt de ne pas comporter d'étape de synthèse du sel néodécanoate par réaction avec une base, ce qui supprime une étape. L'inconvénient est que la réaction n'est pas totale et qu'une étape de séparation de l'oxyde de néodyme n'ayant pas réagi de la solution de tris(néodécanoate) de néodyme est nécessaire en vue d'utiliser le tris(néodécanoate) de néodyme pour d'autres applications, notamment pour la préparation d'un système catalytique.

Le document de brevet US 5,220,045 décrit un procédé de synthèse du néodécanoate de néodyme en une étape comprenant la réaction en milieu biphasique d'une solution aqueuse de nitrate de néodyme avec une solution organique d'acide versatique en présence d'une base de type amine, ammoniaque ou hydroxyde d'ammonium quaternaire. Lors de cette synthèse, le sel néodécanoate d'ammonium est généré in situ afin de réagir avec le nitrate de néodyme. Cette voie de synthèse présente l'intérêt de s'effectuer dans un seul réacteur et d'être totale. Elle présente l'inconvénient de nécessiter l'ajout d'une base dans le milieu réactionnel et de faire intervenir un certain nombre de lavages à l'eau et d'étapes de décantation pour débarrasser le gel de ses impuretés, ce qui est pénalisant d'un point de vue économique. Par ailleurs, Ce procédé génère des effluents aqueux contenant des ions, par exemple du nitrate d'anumonium, ce qui du point de vue environnemental nécessite une étape supplémentaire de traitement ultérieur de ces rejets.

A la différence des voies de synthèse décrites ci-dessus, une synthèse directe consiste à faire réagir directement l'oxyde de terre rare sur l'acide phosphorique ou carboxylique, sans passage par le sel de terre rare et/ou par le sel de phosphate ou de carboxylate.

Le brevet EP 0 924 214 B1 concerne un procédé de fluidification des solutions organiques de composés de terres rares, tels que les phosphates ou les carboxylates de terre rares, par ajout d'acide de Lewis. L'exemple 1 de ce brevet décrit la préparation du di(2-éthyl-hexyl)phosphate de lanthane par réaction de l'oxyde de lanthane $La_2O_3$ avec l'acide di(2-éthyl-hexyl)phosphorique dans de l'hexane et une faible quantité d'eau. Le mélange est agité et porté au reflux jusqu'à obtention d'une solution jaune limpide. L'eau est ensuite éliminée par distillation azéotropique. Le gel obtenu est très visqueux, les viscosités mesurées étant supérieures à 90 000 cps et de structure fragile. Il est en effet précisé dans ce brevet qu'il y a apparition de cavités (zones de rupture) dans le gel lors de la mesure de la viscosité. Cette caractéristique gélatineuse et « cassante » rend difficile la manipulation d'un tel produit, notamment lors des étapes de mise en oeuvre pour la préparation d'un système catalytique pour la polymérisation stéréospécifique 1,4-cis des diènes conjugués, et empêche sa caractérisation. Cela implique de prendre des précautions de manipulation et de caractérisation de ce produit, notamment lors de l'utilisation de ce gel dans un procédé industriel.

Le but de la présente invention est de remédier aux inconvénients rencontrés avec les procédés de synthèse de l'art antérieur. Plus particulièrement, un objectif de la présente invention est de proposer un procédé de synthèse d'un organophosphate de terre rare ne comportant que peu d'étapes et dont le produit soit exempt de précurseur de terre rare résiduel. Un autre objectif de l'invention est une synthèse d'un organophosphate de terre rare qui soit directement et aisément utilisable pour une application ultérieure, notamment pour la préparation d'un système catalytique.

Un autre objectif de l'invention est de mettre en oeuvre un procédé ne générant pas ou peu d'effluents aqueux nécessitant un traitement ultérieur afin de répondre à une problématique environnementale.

Ce but est atteint en ce que l'inventeur vient de découvrir, au cours de ses recherches, un procédé de synthèse par voie directe d'un organophosphate de terre rare dont le produit est, de manière inattendue, exempt d'oxyde de terre rare résiduel ou de toute impureté, dans des quantités pénalisant toute utilisation ultérieure. Le procédé de synthèse par voie directe conduit à un produit dont la manipulation n'est pas pénalisée par un caractère « cassant » qui gênerait sa mise en oeuvre et son utilisation lors de la préparation d'un système catalytique pour la polymérisation 1,4-cis des diènes conjugués. L'organophosphate de terre rare obtenu par ce procédé se présente sous forme de gel peu visqueux. De manière tout aussi inattendue, il s'avère que ce gel est utilisable aisément, tel quel notamment comme précurseur d'un système catalytique destiné à la polymérisation stéréospécifique 1,4-cis des diènes conjugués sans altération de l'activité catalytique du système ou des caractéristiques du polymère synthétisé. Le procédé de synthèse selon l'invention ne génère pas d'effluents aqueux nécessitant un traitement ultérieur.

L'invention a donc pour objet un procédé de synthèse par voie directe d'un organophosphate de terre rare à partir de l'oxyde de terre rare et d'un acide organophosphorique en une seule étape.

Le procédé de synthèse de l'invention permettant de préparer un organophosphate de terre rare est un procédé de synthèse par voie directe qui comprend :

- la dispersion sous fort cisaillement d'un oxyde de terre rare dans un milieu réactionnel biphasique comprenant au moins un acide organophosphorique et deux solvants non-miscibles, et simultanément ou séquentiellement de manière séparée

- la réaction de l'oxyde de terre rare avec l'acide organophosphorique.

La dispersion sous fort cisaillement selon l'invention peut être réalisée par tout moyen approprié à l'aide de tout mélangeur dynamique connu de l'homme de l'art. Conviennent particulièrement les dispositifs constitués d'un agitateur rotatif comprenant un ou plusieurs mobiles fixés sur un arbre, qui dissipent des puissances volumiques de l'ordre de 0,1 à 250 kW/m3/unité de viscosité dynamique du mélange réactionnel, plus particulièrement de l'ordre de 1 à 150 kW/m3/Pa.s. Le cisaillement dépend des caractéristiques du mobile, en particulier de sa géométrie. Des dispositifs de ce genre sont par exemple des mélangeurs à rotor et stator, notamment ceux commercialisés par la société VMI Rayneri sous la marque "Ultramix" et par la société IKA sous la marque "Ultra Turrax".

Par " fort cisaillement " on doit comprendre un " taux de cisaillement élevé " ou un " gradient de vitesse élevé ", qui sont deux expressions synonymes pour l'homme de l'art. Par le terme "fort" ou "élevé" on entend dans le cas présent suffisamment fort ou élevé pour atteindre les propriétés recherchées des organophosphates de terre rare préparés selon le procédé de l'invention.

La notion de "gradient de vitesse moyen" dans une cuve agitée est définie par exemple dans l'article " Agitation Mélange - concepts théoriques de base ", écrits par Michel Roustan, Jean-Claude Pharamond, Alain Liné de l'ouvrage " Techniques de l'ingénieur, traité Génie des Procédés - J3 800, page 13". Cette notion est par exemple utilisée dans le brevet US 6,638,918, qui la décrit de la même manière que dans la référence précédente. Ainsi, on peut exprimer le cisaillement moyen ($\Gamma_{moyen}$) dans le milieu réactionnel par la formule :

$$\Gamma_{moyen} = k\ N$$

dans laquelle k est une constant de proportionnalité qui dépend du type de pale du mélangeur et de la configuration de la cuve du mélangeur et N est la vitesse des mobiles d'agitation (en $s^{-1}$). $\Gamma_{moyen}$ est exprimé en $s^{-1}$. Les mélangeurs utilisables pour mettre en oeuvre le procédé selon l'invention présente une constante k variant entre 10 et 13.

On associe à cette notion de cisaillement une vitesse périphérique en bout de pale, exprimée par l'expression :

$$V_{périph} = \pi\ N\ D$$

dans laquelle D est le diamètre des mobiles d'agitation exprimé en mètre et N leur vitesse de rotation exprimée en $s^{-1}$.

Selon l'invention, on entend par "dispersion sous fort cisaillement", une dispersion effectuée sous une agitation à grande vitesse en bout de pale, typiquement supérieure à 4 $m.s^{-1}$, de préférence supérieure ou égale à 10 $m.s^{-1}$, et encore plus préférentiellement comprise entre 10 $m.s^{-1}$ et 40 $m.s^{-1}$, qui impartit un cisaillement au milieu réactionnel, typiquement supérieur à 200 $s^{-1}$, de préférence compris entre 200 $s^{-1}$ et 20000 $s^{-1}$.

En fonction du niveau de cisaillement recherché, l'homme du métier saura utiliser un système d'agitation ayant

une géométrie adaptée et le mettre en oeuvre à une vitesse de rotation suffisante pour atteindre la vitesse de rotation en bout de pales et le niveau de cisaillement recherchés. Selon la nature du système d'agitation et la taille du réacteur de synthèse, la vitesse de rotation peut à titre d'exemple être comprise entre 100 $tr.min^{-1}$ et 30 000 $tr.min^{-1}$.

La température du milieu réactionnel pendant la dispersion sous fort cisaillement de l'oxyde de terre rare dans ce milieu et la réaction de l'oxyde de terre rare avec l'acide organophosphorique est définie en fonction de la nature des solvants utilisés et de la quantité totale d'acide phosphorique introduite dans le milieu. La température du milieu réactionnel est généralement comprise entre 0 et 130°C. Cette température est préférentiellement comprise entre 50 et 110°C.

La durée de la dispersion de l'oxyde de terre rare dans le milieu réactionnel peut varier de 1 à 400 minutes, préférentiellement elle est de 1 à 60 minutes. La durée globale de la dispersion de l'oxyde de terre rare et de sa réaction avec l'acide organophosphorique est de 1 à 400 minutes.

Selon l'invention, on entend par "terre rare" un métal choisi parmi l' yttrium, le scandium et les lanthanides, métaux ayant un numéro atomique allant de 57 à 71 inclus dans le tableau périodique des éléments de Mendeleïev. De préférence le métal de terre rare est choisi parmi les lanthanides, tels que notamment le lanthane, le praséodyme, le gadolinium ou le néodyme, le néodyme étant plus particulièrement préféré.

Bien que le procédé de l'invention s'applique également à l'yttrium et au scandium, l'invention sera décrite dans le paragraphe qui suit par référence aux lanthanides pour des raisons de simplification de l'écriture.

L'un des réactifs du procédé de l'invention est l'oxyde de lanthanide. Selon l'invention, on entend par oxyde de lanthanide toute espèce de type sesquioxyde de lanthanide répondant à la formule $Ln_2O_3$, mais aussi toute forme hydratée, partiellement ou en totalité, d'oxyde de lanthanide contenant des fonctions Ln-OH. En effet, de par leur caractère hygroscopique, les oxydes de lanthanide peuvent absorber une certaine quantité d'eau sous l'effet de l'humidité de l'air ambiant. Cette eau peut conduire à l'hydratation de l'oxyde de lanthanide et à la formation d'autres espèces à base de lanthanides, tel que le tris(hydroxyle) de lanthanide, selon l'équation :

$$Ln_2O_3 + 3\,H_2O \rightleftharpoons 2\,Ln(=O)OH + 2\,H_2O \rightleftharpoons 2\,Ln(OH)_3$$

A titre d'illustration dans le cas où le métal de lanthanide est le néodyme, le taux massique en néodyme théorique du sesquioxyde de néodyme, noté $\%Nd[Nd_2O_3]_{théo}$ est de 85,74 %. Le taux massique en néodyme théorique du tris(hydroxyle) de néodyme, noté $\%Nd[Nd(OH)_3]_{théo}$ est de 73,87 %.

Le taux massique de néodyme de la matière première utilisée, noté $\%Nd[Nd_2O_3]$ est déterminée selon toute méthode de caractérisation connue de l'homme du métier. Par exemple, peuvent être utilisées les méthodes de dosage décrites dans la demande de brevet WO03/097708 au nom des Demanderesses.

On définit ainsi le degré d'hydratation $D_{hydratation}$ d'un oxyde de lanthanide comme étant :

$$D_{Hydratation} = \frac{\%Nd[Nd_2O_3] - \%Nd[Nd(OH)_3]_{théo}}{\%Nd[Nd_2O_3]théo - \%Nd[Nd(OH)_3]_{théo}}$$

Ainsi, le degré d'hydratation $D_{hydratation}$ selon l'invention de sesquioxyde de néodyme pur de formule $Nd_2O_3$ est de 0%, tandis que le degré d'hydratation de tris(hydroxyle) de néodyme de formule $Nd(OH)_3$ est de 100%.

Préférentiellement, le procédé de synthèse selon l'invention met en jeu un oxyde de terre rare ayant un degré d'hydratation supérieur ou égal à 5%, préférentiellement supérieur ou égal à 25% et encore plus préférentiellement supérieur à 50%. L'inventeur a mis en évidence que dans certaines conditions de réaction, notamment pour des temps de réaction court, un degré d'hydratation élevé de l'oxyde de terre rare s'avérait avantageux.

L'acide organophosphorique, deuxième réactif du procédé selon l'invention, est choisi parmi les composés suivants: les diesters d'acide phosphorique de formule générale (RO)(R'O)PO(OH), dans laquelle R est un radical alkyle, aryle ou alkylaryle et R' est un radical alkyle, aryle ou alkylaryle; les monoesters d'acide phosphorique de formule générale (RO)PO(OH)2 dans laquelle R est un radical alkyle, aryle ou alkylaryle; les phosphonates de formule générale

(RO)R'P(O) ou RP(O)(OH)2 dans lesquelles R est un radical alkyle, aryle ou alkylaryle; les phosphinates de formule générale R(R')P(O)OH ou R(H)P(O)OH dans lesquelles R est un radical alkyle, aryle ou alkylaryle; et leurs mélanges.

De préférence, l'acide organophosphorique est choisi parmi les diesters d'acide phosphorique de formule générale (RO)(R'O)PO(OH), dans laquelle R est un radical n-butyle, isobutyle, pentyle, amyle, isopentyle, 2,2-diméthylhexyle, 1-éthylhexyle, 2-éthylhexyle, tolyle, nonaphenoxyle et R'est un radical n-butyle, isobutyle, pentyle, amyle, isopentyle, 2,2-diméthylhexyle, 2- éthylhexyle, 1-éthylhexyle, tolyle, nonaphenoxyle; les monoesters d'acide phosphorique de formule générale $(RO)PO(OH)_2$ dans laquelle R est un radical n-butyle, isobutyle, pentyle, amyle, isopentyle, 2,2-diméthylhexyle, 1-éthylhexyle, 2- éthylhexyle, tolyle, nonaphenoxyle; les phosphonates de formule générale (RO)R'P(O) ou RP(O) $(OH)_2$ dans lesquelles R est un radical n-butyle, isobutyle, pentyle, amyle, isopentyle, 2,2-diméthylhexyle, 2- éthylhexyle, 1-éthylhexyle, tolyle, nonaphenoxyle; les phosphinates de formule générale R(R')P(O)OH ou R(H)P(O) OH dans lesquelles R est un radical n-butyle, isobutyle, pentyle, amyle, isopentyle, 2,2-diméthylhexyle, 2- éthylhexyle, 1-éthylhexyle, tolyle, nonaphenoxyle; et leurs mélanges. A titre encore plus préférentiel, l'acide organophosphorique selon l'invention est choisi parmi l'acide di(2-éthylhexyl)phosphorique.

Le rapport molaire de l'acide organophosphorique à l'oxyde de terre rare est fonction de la nature de l'acide organophosphorique. L'homme du métier ajustera la quantité d'acide organophosphorique à introduire dans le milieu réactionnel en fonction de sa nature.

Lorsque l'acide organophosphorique est un diester d'acide phosphorique, le rapport molaire de l'acide organophosphorique à la terre rare est de 2,9 à 6, de préférence de 2,95 à 5, et encore plus préférentiellement de 3 à 3,4.

Selon le procédé de l'invention, le milieu réactionnel comprend au moins deux solvants non-miscibles. On entend par solvants non-miscibles dans le cadre de l'invention un mélange comprenant au moins un solvant hydrocarboné inerte, l'autre solvant étant préférentiellement de l'eau. Selon un mode préférentiel de réalisation de l'invention, le solvant hydrocarboné inerte est un solvant aliphatique et alicyclique de bas poids moléculaire, tel que, à titre indicatif, le n-pentane, l'isopentane, le cyclopentane, une coupe de composés en C5, une coupe C5 de vapocraquage de naphta, l'hexane, le cyclohexane, une coupe d'isomères de l'hexane, le méthylcyclohexane, l'heptane, leurs isomères ou un mélange de ces solvants. A titre encore plus préférentiel, on utilise le cyclohexane, le méthylcyclohexane ou leur mélange à titre de solvants hydrocarbonés inertes.

Selon une mise en oeuvre préférentielle de l'invention, le rapport en volume de l'eau par rapport au solvant hydrocarboné inerte est strictement supérieur à 0 et strictement inférieur à 1.

Selon une variante du procédé de l'invention, le milieu réactionnel peut également comprendre d'autres composants susceptibles d'agir sur la mise en oeuvre du procédé ou encore sur les propriétés du produit obtenu. Ainsi, en vue de diminuer encore plus la viscosité de la solution d'organophosphate de terre rare préparé selon l'invention, il est possible d'ajouter un agent fluidifiant avant, pendant et/ou après la synthèse de ce sel. Selon une mise en oeuvre particulière, l'agent fluidifiant est ajouté en tout début de synthèse. Parmi ces agents fluidifiants on peut citer par exemple les acides de Lewis, les alcools tels que le méthanol, l'éthanol, le propan-1-ol, le propan-2-ol, le butan-1-ol, le butan-2-ol, les polyalcools tels que les glycols, le 1,2-diéthanediol, le 1,2-propanediol, le 1,2- le 1,3- ou le 1,4-butanediol, les éthers de glycol, ou leurs mélanges.

Selon une variante du procédé de synthèse de l'invention, les étapes de dispersion sous fort cisaillement de l'oxyde de terre rare dans le milieu réactionnel et de réaction de l'oxyde de terre rare et de l'acide organophosphorique peuvent être mise en oeuvre dans un même réacteur (synthèse "one-pot"). Dans ce cas, la dispersion de l'oxyde de terre rare dans le milieu réactionnel et la réaction de l'oxyde de terre rare et de l'acide organophosphorique peuvent avoir lieu simultanément ou séquentiellement. La simultanéité de ces deux étapes constitue une mise en oeuvre préférentielle de l'invention dans la mesure où la durée globale du procédé de synthèse est diminuée.

Selon une autre variante du procédé de synthèse de l'invention, les étapes de dispersion sous fort cisaillement de l'oxyde de terre rare dans le milieu réactionnel et de réaction de l'oxyde de terre rare avec l'acide organophosphorique peuvent être mises en oeuvre dans deux réacteurs différents. Après la dispersion sous fort cisaillement de l'oxyde de terre rare dans le milieu réactionnel, le mélange est transféré dans un deuxième réacteur. Ce deuxième réacteur peut être équipé d'un système d'agitation mécanique classique à pales et la réaction peut s'effectuer sous agitation mécanique. Le milieu réactionnel dans les deux réacteurs est généralement chauffé à une température de 0 et 100°C pendant une durée globale du procédé variant de 0 et 400 minutes. Selon cette variante, les étapes du procédé de l'invention peuvent se dérouler séquentiellement ou simultanément, la réaction de l'oxyde de terre rare avec l'acide organophosphorique pouvant par exemple avoir débuté durant la dispersion sous fort cisaillement de l'oxyde de terre rare dans le milieu réactionnel, dans le premier réacteur, et être poursuivie dans le deuxième réacteur.

Après réaction de l'acide phosphorique avec l'oxyde de lanthanide, le gel de phosphate de lanthanide obtenu comprend de l'eau et doit donc être séché, notamment en vue de l'utilisation ultérieur du gel de phosphate de lanthanide pour la préparation d'un catalyseur de polymérisation des diènes conjugués. Cette élimination peut être effectuée par tout procédé connu de l'homme du métier. Selon une variante préférentielle de l'invention, l'eau est éliminée par distillation azéotropique.

La mise en oeuvre du procédé de l'invention permet la synthèse d'un organophosphate de terre rare sous forme d'un gel avec un taux élevé de conversion de l'oxyde de terre rare. Aucune étape de lavage ou de purification supplémentaire n'est nécessaire. Ceci n'exclut toutefois pas de telles étapes tout en restant dans le cadre de l'invention. Lorsqu'une telle étape de lavage ou de purification supplémentaire est réalisée, la réalisation d'un traitement ultérieur des rejets aqueux n'est pas nécessaire, ceux-ci étant soient exempts de tout sous-produit de la réaction, soit recyclables dans le procédé de synthèse.

En effet, selon une autre variante du procédé de synthèse de l'invention, une étape optionnelle de lavage de gel de phosphate de lanthanide est réalisée immédiatement après la réaction de l'acide phosphorique sur l'oxyde de lanthanide . Cette étape de lavage consiste à introduire dans le milieu réactionnel, composé de l'organophosphate de

lanthanide, un volume supplémentaire d'eau, puis à agiter le milieu biphasique ainsi résultant de manière à laver le gel, puis enfin à séparer par toute méthode connue de l'homme de l'art la phase aqueuse du gel organique de phosphate de lanthanide. Cette étape de lavage permet notamment l'élimination des réactifs en excès n'ayant pas réagi, tels que par exemple l'acide organophosphorique. L'homme du métier ajustera les conditions de lavage, en terme de volume d'eau utilisé, des conditions d'agitation mises en oeuvre et du nombre de lavage consécutifs afin d'atteindre les caractéristiques du produit recherchées.

Cette quantité d'eau supplémentaire doit être éliminée en fin de lavage, notamment en vue de l'utilisation ultérieure du gel de phosphate de lanthanide pour la préparation d'un catalyseur de polymérisation des diènes conjugués. Cette quantité d'eau ne présente pas d'ions en solution, tels que des ions nitrate ou ammonium qui nécessiteraient un traitement ultérieur spécifique. Cette quantité d'eau peut éventuellement être recyclée en amont du procédé de synthèse, dé manière à réutiliser l'acide organophosphorique, tel que l'acide di(2-éthylhexyl)phosphorique, n'ayant pas réagi.

Le gel obtenu par le procédé de synthèse de l'invention comprend au moins un organophosphate de terre rare et un solvant hydrocarboné inerte tel que défini précédemment. Il peut également comprendre de l'acide libre résiduel, ainsi qu'une infime quantité d'eau.

Selon une variante préférentielle, le procédé de l'invention permet la synthèse de organophosphate de lanthanide, et plus particulièrement un organophosphate de néodyme sous forme d'un gel. La synthèse, conformément au procédé de l'invention, du tris[di(2-éthylhexyl)phosphate de néodyme constitue un aspect particulièrement préféré de cette variante.

Le gel d'organophosphate de néodyme obtenu préférentiellement par la mise en oeuvre du procédé de synthèse selon l'invention possède avantageusement les caractéristiques suivantes :

- le taux massique de Nd est compris entre 1,5 et 5%, préférentiellement entre 2 et 5%.

- le nombre de moles d'acide organophosphorique libre est compris entre 15 et 200% par rapport au nombre de moles de néodyme, préférentiellement entre 30 et 100%.

- la quantité d'eau résiduelle dans le gel est inférieure à 500 ppm, préférentiellement inférieure à 200 ppm et encore plus préférentiellement inférieur à 100 ppm.

- la viscosité des gels est strictement comprise entre 2 000 et 90 000 cP, la valeur de 90 000 étant exclue de ce domaine.

Le gel d'organophosphate de terre rare obtenu par le procédé conforme à l'invention peut avantageusement être utilisé tel quel ou il peut subir des modifications après sa préparation et avant toute utilisation ultérieure, sans que cela sorte du cadre de l'invention. Dans la présente demande, on entend par modification tout traitement que pourrait subir le gel obtenu directement par le procédé de l'invention, par exemple l'élimination de tout ou partie de l'acide libre résiduel par toute méthode connue de l'homme du métier, tel que notamment le lavage par une solution aqueuse, le lavage par une solution aqueuse contenant une base, tel que de l'ammoniaque ou de la soude, le lavage par une solution aqueuse contenant un acide ou encore l'adjonction d'agents divers tels que par exemple un agent fluidifiant en vue de diminuer la viscosité du produit. Parmi ces agents fluidifiants on peut citer par exemple les acides de Lewis, les alcools tels que le méthanol, l'éthanol, le propan-1-ol, le propan-2-ol, le butan-1-ol, le butan-2-ol, les polyalcools tels que les glycols, le 1,2-diéthanediol, le 1,2-propanediol, le 1,2- le 1,3- ou le 1,4-butanediol, les éthers de glycol, ou leurs mélanges. On peut également citer certains dérivés de l'aluminium répondant à la formule $Al(R)_{3-n}H_n$, où n a pour valeur 0, 1 ou 2 et R est un hydrocarbure comportant 1 à 8 atomes de carbone, tel que par exemple notamment le triéthylaluminium, le tri-iso-butylaluminium, le tri-octylaluminium ou encore l'hydrure de dis-isobutylaluminium.

Le gel d'organophosphate de terre rare obtenu par le procédé conforme à l'invention peut être utilisé tel quel par exemple pour la préparation de systèmes catalytiques pour la polymérisation stéréospécifique de diènes conjugués. Notamment il peut être utilisé tel quel, conjointement avec un agent d'alkylation, un alkylaluminium par exemple, et conjointement avec un donneur d'halogène, un chlorure de dialkylaluminium par exemple, sans que cela nuise à la préparation du catalyseur, ou à son activité.

L'organophosphate de terre rare, particulièrement le tris(organophosphate) de néodyme, préparé selon le procédé conforme à l'invention peut avantageusement être utilisé lors de la préparation d'un système catalytique "préformé" pour la polymérisation stéréospécifique de diènes conjugués à base d'au moins :

- un monomère diène conjugué,
- le gel d'organophosphate de terre rare décrit précédemment et obtenu par le procédé de synthèse de l'invention, modifié ou non,
- un agent d'alkylation constitué d'un alkylaluminium de formule $AlR_3$ ou $HAlR_2$ et
- un donneur d'halogène qui appartient à la famille des halogénures d'alkylaluminium à l'exclusion des sesquihalogénures d'alkylaluminium.

Cette utilisation se fait sans altération liée à la nature de l'organophosphate de terre rare et/ou à son procédé d'obtention. C'est pourquoi cette utilisation particulièrement avantageuse fait également l'objet de l'invention.

Le procédé de préparation de ce système catalytique "préformé" selon l'invention met en oeuvre les étapes suivantes :

- dans une première étape on prépare l'organophosphate de terre rare, plus particulièrement l'organophosphate de néodyme selon le procédé décrit plus haut,
- dans une deuxième étape on ajoute au gel d'organophosphate de terre rare obtenu un monomère diène conjugué,
- dans une troisième étape, on ajoute un agent d'alkylation à la solution obtenue au terme de la deuxième étape pour l'obtention d'un sel alkylé, et
- dans une quatrième étape, on ajoute un donneur d'halogène au sel alkylé obtenu précédemment.

Les monomères de diènes conjugués, les agents d'alkylation et les donneurs d'halogène utilisables dans le cadre du procédé de préparation du système catalytique de l'invention sont tels que définis notamment dans le brevet EP 1 509 557 B1 au nom des Demanderesses.

Le système catalytique selon l'invention est particulièrement adapté pour la polymérisation stéréospécifique 1,4-cis de diènes conjugués, en particulier du butadiène et de l'isoprène.

Le procédé de polymérisation de diènes conjugués consiste à faire réagir au moins un monomère de diène conjugué en présence du système catalytique de l'invention dans un solvant de polymérisation hydrocarboné inerte, par exemple du cyclohexane, du méthylcyclohexane ou leur mélange. Ce procédé est de préférence mis en oeuvre à une température allant de 0° C à 100° C.

Le polymère ainsi préparé présente un taux élevé d'unités 1,4-cis, de préférence supérieur à 97%, et une macrostructure possédant une distribution de masse molaire étroite.

A titre d'exemple, on peut citer la préparation de polybutadiène par polymérisation en discontinu avec un système catalytique à base de d'organophosphate de néodyme de l'invention, présentant un indice de polydispersité Ip, mesuré par la technique "SEC", inférieur à 2, ou encore la préparation en discontinu de polyisoprène présentant un indice de polydispersité inférieur à 2,7. La polymérisation en continu avec le même système catalytique permet l'obtention de polybutadiène et de polyisoprène présentant respectivement des valeurs Ip inférieures à 2,7 et 3,5.

Les caractéristiques précitées de la présente invention, ainsi que d'autres, seront mieux comprises à la lecture de la description suivante de plusieurs exemples de réalisation de l'invention, donnés à titre illustratif et non limitatif, ainsi que des diagrammes qui représentent l'activité catalytique de systèmes catalytiques conformes à l'invention et de l'état de la technique, évaluée par mesure du taux de conversion du monomère en polymère en fonction du temps de réaction.

## I. SYNTHESE DE SELS DE PHOSPHATE ORGANIQUE DE NEODYME

On a synthétisé du tris(di(2-éthyl-hexyl)phosphate) de néodyme. On a utilisé pour chaque essai les conditions de synthèse qui sont détaillées ci-après.

Matières premières

*1-Oxyde de néodyme*

On utilise un oxyde de néodyme avec un taux massique en néodyme égal à 73,6% (type A) ou un oxyde de néodyme avec un taux massique en néodyme égal à 82,4% massique (type B).

*2-Autres réactifs*

L'acide di(2-éthyl-hexyl) phosphorique, le cyclohexane, le méthylcyclohexane et les autres réactifs ont été obtenus auprès de fournisseurs classiques.

**Techniques de caractérisation.**

*1-Dosage du Nd et du P*

Les teneurs massiques en néodyme et en phosphore sont déterminées par analyses élémentaires par complexométrie.

*2-Dosage de l'acide libre*

La quantité d'acide organophosphorique libre est déterminée par dosage potentiométrique par réaction acido-basique.

*3-Dosage de l'eau*

La méthode Karl-Fisher est utilisée.

*4-Taux d'insolubles*

La quantité d'insolubles présents dans le gel de tris(di(2-éthylhexyl)phosphate) de néodyme est déterminée par centrifugation du gel à la température de 20°C à la vitesse de 3 500 tr.min-1 et est exprimée en pourcentage massique de solide par rapport au gel.

**1) Synthèse d'un sel de phosphate organique de néodyme selon le procédé décrit dans brevet EP 0 924 921 B1 :**

Les contre-exemples qui suivent permettent de mettre en évidence l'intérêt d'une agitation sous fort cisaillement.

Contre-Exemple 1 :

Dans un réacteur de 1 Litre à double enveloppe muni d'un Dean-Stark, d'un réfrigérant, d'un système d'agitation mécanique à pales, on introduit 15,59 g de $Nd_2O_3$ de type A (0,040 mol), 83,8 g d'acide di(2-éthyl-hexyl)phosphorique (DEHPA) (0,249 mol), 560 ml de méthylcyclohexane et 20 ml d'eau. Le mélange est porté au reflux et agité pendant 300 minutes. On remarque la présence d'un solide en suspension. L'eau du milieu réactionnel est ensuite éliminée par distillation azéotropique. Après sous-tirage du réacteur, on obtient 490 g d'un gel turbide visqueux et cassant et qui présente des particules solides en suspension. Le solide ne peut pas être séparé du gel par centrifugation, en raison de la trop forte viscosité du gel.

Cet essai montre que les conditions de synthèse décrites dans l'exemple 1 du brevet EP 0 924 214 B1 appliquées à l'oxyde de néodyme et à un solvant alicyclique ne permettent pas d'obtenir un gel de tris(organophosphate) limpide et exempt de résidu solide en suspension.

Contre-Exemple 2 :

Dans un réacteur de 1 Litre à double enveloppe muni d'un Dean-Stark, d'un réfrigérant, d'un système d'agitation mécanique à pales, on introduit 13,99 g de $Nd_2O_3$ de type B (0,040 mol), 83,8 g d'acide di(2-éthyl-hexyl)phosphorique (DEHPA) (0,249 mol), 560 ml de méthylcyclohexane et 20 ml d'eau. Le mélange est porté au reflux et agité pendant 300 minutes. On remarque la présence d'un solide en suspension. L'eau du milieu réactionnel est ensuite éliminée par distillation azéotropique. Après sous-tirage du réacteur, on obtient 497 g d'un gel visqueux et cassant et qui présente un solide en suspension. Le solide ne peut pas être séparé du gel par centrifugation, en raison de la trop forte viscosité du gel.

Cet essai montre que les conditions de synthèse décrites dans l'exemple 1 du brevet EP 0 924 214 B1 appliquées à l'oxyde de néodyme et à un solvant alicyclique ne permettent pas d'obtenir un gel de tris(organophosphate) limpide et exempt de résidu solide en suspension.

Contre-Exemple 3 :

Dans un réacteur de 1 litre à double enveloppe muni d'un Dean-Stark, d'un réfrigérant, d'un système d'agitation mécanique à pales, on introduit 15,59 g de $Nd_2O_3$ de type A (0,040 mol), 92,3 g d'acide di(2-éthyl-hexyl)phosphorique (DEHPA) (0,275 mol), 550 ml de méthylcyclohexane et 20 ml d'eau. Le mélange est porté au reflux et agité pendant 120 minutes. On remarque la présence d'un solide en suspension. L'eau du milieu réactionnel est ensuite éliminée par distillation azéotropique. Après sous-tirage du réacteur, on obtient 480 g d'un gel présentant un solide en suspension (taux massique de solide = 0,3%).

Cet essai démontre, en fluidifiant le gel obtenu pour une meilleure centrifugation grâce à l'ajout d'une quantité supplémentaire de DEHPA, que le gel contient une quantité de solide résiduel non négligeable.

Contre-Exemple 4 :

Dans un réacteur de 1 litre à double enveloppe muni d'un Dean-Stark, d'un réfrigérant, d'un système d'agitation mécanique à pales, on introduit 16,82 g de $Nd_2O_3$ de type A (0,043 mol), 105 g d'acide di(2-éthyl-hexyl)phosphorique (DEHPA) (0,314 mol), 685 ml de méthylcyclohexane et 20 ml d'eau. Le mélange est porté au reflux et agité pendant 210 minutes. On remarque la présence d'un solide en suspension. L'eau du milieu réactionnel est ensuite éliminée par distillation azéotropique. Après sous-tirage du réacteur, on obtient 595,5 g d'un gel présentant un solide en suspension (taux massique de solide = 0,38%).

Cet essai démontre, en fluidifiant davantage le gel obtenu pour une meilleure centrifugation grâce à l'ajout d'une quantité supplémentaire de DEHPA, que le gel contient une quantité de solide résiduel non négligeable.

L'ensemble de ces exemples démontrent que les conditions de synthèse décrites dans le document de brevet EP 0 924 214 B1 appliquée au métal néodyme et à un solvant alicyclique ne permettent pas d'obtenir un gel d'organophosphate de néodyme limpide.

**3) Synthèse d'un sel de phosphate organique de néodyme selon le procédé de l'invention :**

Exemple 1

Dans un réacteur de 1 litre à double enveloppe muni d'un Dean-Stark, d'un réfrigérant, d'un système d'agitation mécanique à pales, on introduit 15,59 g de $Nd_2O_3$ de type B (0,040 mol), 83,7 g d'acide di(2-éthyl-hexyl)phosphorique (DEHPA) (0,250 mol), 560 ml de méthylcyclohexane et 20 ml d'eau. Le mélange subit un traitement avec un rotor-stator de marque Ultra-Turrax pendant 20 minutes, de manière à disperser l'oxyde de néodyme dans le milieu réactionnel. Le mélange est porté au reflux pendant 280 minutes. L'eau du milieu réactionnel est ensuite éliminée par distillation azéotropique. Après sous-tirage du réacteur, on obtient 440g d'un gel violet translucide.

Exemple 2

Dans un réacteur de 1 litre à double enveloppe muni d'un Dean-Stark, d'un réfrigérant, d'un système d'agitation mécanique à pales, on introduit 15,59 g de $Nd_2O_3$ de type B (0,040 mol), 92,2 g d'acide de DEHPA (0,275 mol), 550 ml de méthylcyclohexane et 20 ml d'eau. Le mélange subit un traitement avec un rotor-stator de marque Ultra-Turrax pendant 20 minutes, de manière à disperser l'oxyde de néodyme dans le milieu réactionnel. Le mélange est porté au reflux pendant 100 minutes. L'eau du milieu réactionnel est ensuite éliminée par distillation azéotropique. Après sous-tirage du réacteur, on obtient 463g d'un gel violet translucide.

Exemple 3

Dans un réacteur de 1 litre à double enveloppe muni d'un Dean-Stark, d'un réfrigérant, d'un système d'agitation mécanique à pales, on introduit 14,21 g de $Nd_2O_3$ de type B (0,036 mol), 88,3 g de DEHPA (0,264 mol), 560 ml de méthylcyclohexane et 20 ml d'eau. Le mélange subit un traitement avec un rotor-stator de marque Ultra-Turrax pendant 45 minutes, de manière à disperser l'oxyde de néodyme dans le milieu réactionnel et à réaliser la réaction du DEHPA sur l'oxyde de néodyme. Pendant ce traitement, le mélange est porté au reflux. L'eau du milieu réactionnel est ensuite éliminée par distillation azéotropique. Après sous-tirage du réacteur, on obtient 463g d'un gel violet translucide.

Exemple 4

Dans un réacteur de 1 litre à double enveloppe muni d'un Dean-Stark, d'un réfrigérant, d'un système d'agitation mécanique à pales, on introduit 17,3 g de $Nd_2O_3$ de type B (0,044 mol), 107,7 g de DEHPA (0,322 mol), 680 ml de méthylcyclohexane et 30 ml d'eau. Le mélange subit un traitement avec un rotor-stator de marque VMI Rayneri TRIMIX pendant 45 minutes, de manière à disperser l'oxyde de néodyme dans le milieu réactionnel. L'eau du milieu réactionnel est ensuite éliminée par distillation azéotropique. Après sous-tirage du réacteur, on obtient 650g d'un gel violet translucide.

Le tableau 1 ci-après reprend les données expérimentales importantes et présente les caractéristiques des différents gels synthétisés.

On constate que les gels de tris[di(2-éthyl-hexyl)phosphate] de néodyme obtenus avec le procédé selon l'invention sont exemptes de solide insoluble, et donc d'oxyde de néodyme résiduel.

Tableau 1

| | C.-Ex. 1 | C.-Ex. 2 | C.-Ex. 3 | C.-Ex. 4 | Ex. 1 | Ex. 2 | Ex. 3 | Ex. 4 |
|---|---|---|---|---|---|---|---|---|
| Stoechiométrie DEHPA/Nd initiale | 3,12 | 3,12 | 3,44 | 3,65 | 3,12 | 3,44 | 3,63 | 3,63 |
| Appareillage utilisé pour la dispersion | Non | Non | Non | Non | Ultra-Turrax | Ultra-Turrax | Ultra-Tuwax | Trimix |
| Diamètre du mobile (m) | 0.04 | 0.04 | 0.04 | 0.04 | 0.016 | 0.016 | 0.016 | 0.069 |
| Vitesse de rotation (tr/s) | 8.3 | 8.3 | 8.3 | 8.3 | 400 | 400 | 400 | 50 |
| Vitesse périphérique en bout de pale ($m.s^{-1}$) | 1 | 1 | 1 | 1 | 20 | 20 | 20 | 10.7 |
| Cisaillement calculé avec k=10 ($s^{-1}$) | 83 | 83 | 83 | 83 | 4000 | 4000 | 4000 | 500 |
| Durée de la dispersion en minutes | | | | | 20 | 20 | 45 | 45 |
| Durée du reflux en minutes | 300 | 300 | 120 | 220 | 280 | 100 | | |
| Durée de la distillation azéotropique en minutes | 180 | 180 | 180 | 180 | 180 | 180 | 120 | 180 |
| Durée totale de la synthèse en minutes | 480 | 480 | 400 | 400 | 480 | 400 | 165 | 225 |
| Aspect du gel | Turbide | Turbide | Turbide | Turbide | Translucide | Translucide | Translucide | Translucide |
| Présence de solide | oui | oui | oui | oui | non | non | non | non |
| Taux d'insolubles | Non-dét. | Non-dét. | 0,3% | 0,38% | 0 | 0 | 0 | 0 |
| % Nd | 2,42% | 2,34% | 2,26% | 1,90% | 2,33% | 2,35% | 2,52% | 2,77% |
| % acide libre | 1,80% | 1,65% | 3,77%b | 6,64% | 1,89% | 3,61% | 4,32% | 4,18% |
| Viscosité en cP | 92 000 | 96 000 | 34000 | Non dét. | 39 000 | 44 000 | 32 000 | 53 000 |
| Non-dét. : valeur non déterminée | | | | | | | | |

A la lecture des résultats décrits dans le tableau précédent, l'homme du métier conclura que les gels préparés dans les contre-exemples 1 à 4 ne sont pas satisfaisants, d'une part en raison de la viscosité élevée et d'autre part en raison de la présence d'un résidu solide en suspension, ces paramètres étant tout deux pénalisant en vue d'une utilisation ultérieure pour la préparation d'un système catalytique pour la polymérisation des diènes conjugués.

**4) <u>Synthèse d'un sel de phosphate organique de néodyme à plus grosse échelle selon le procédé de l'invention :</u>**

Les synthèses décrites dans les exemples 5 à 8 sont réalisées dans un réacteur conique de 50 Litres, de marque VMI Rayneri TRIMIX, possédant un racleur de paroi et un arbre central, dont la base est équipée d'un rotor-stator, équipé en son centre de trois contre-pales. Les trois mobiles d'agitations sont indépendants et ont leur propre vitesse d'agitation, 3100 tr.min-1 pour le rotor-stator, 200 tr.min-1 pour les contre-pales et 67 tr.min-1 pour les racleurs. Le réacteur est équipé d'une colonne à distiller surmontée d'un condenseur et d'un décanteur permettant de séparer l'eau du solvant.

<u>Exemple 5 - Synthèse dans le MCH d'un gel à 2,3 % massique</u>

On introduit dans le réacteur 0,88 kg de $Nd_2O_3$ de type B, 1,2 litres d'eau, 5,37 kg de DEHPA et 33 litres de méthylcyclohexane. Le milieu réactionnel est agité au moyen des trois mobiles d'agitation et la température du milieu est portée à 75°C en 35 minutes. Une fois le système stabilisé en température, l'eau du milieu réactionnel est éliminée par distillation azéotropique. Après 2 heures, le milieu réactionnel est refroidi à 40°C puis coulé dans un récipient adapté. On obtient ainsi 29,5 kg de gel limpide présentant les caractéristiques reportées dans le tableau 2.

<u>Exemple 6 - Synthèse dans le cyclohexane d'un gel à 2,3 % massique</u>

On introduit dans le réacteur 0,875 kg de $Nd_2O_3$ de type B, 1,2 litres d'eau, 5,32 kg de DEHPA et 33 litres de cyclohexane. Le milieu réactionnel est agité au moyen des trois mobiles d'agitation et la température du milieu est portée à 66°C en 20 minutes. Une fois le système stabilisé en température, l'eau du milieu réactionnel est éliminée par distillation azéotropique. Après 3 heures et 30 minutes, le milieu réactionnel est refroidi à 30°C puis coulé dans un récipient adapté. On obtient ainsi un gel limpide présentant les caractéristiques reportées dans le tableau 2.

<u>Exemple 7 - Synthese dans le pentane d'un gel à 2,3% massique</u>

On introduit dans le réacteur 0,875 kg de $Nd_2O_3$ de type B, 1,45 litres d'eau, 5,32 kg de DEHPA et 40 litres de pentane. Le milieu réactionnel est agité au moyen des trois mobiles d'agitation et la température du milieu est portée à 40°C en 15 minutes. Une fois le système stabilisé en température, l'eau du milieu réactionnel est éliminée par distillation azéotropique. Après 6 heures, le milieu réactionnel est refroidi à 20°C puis coulé dans un récipient adapté. On obtient ainsi un gel limpide présentant les caractéristiques reportées dans le tableau 2.

<u>Exemple 8 - Synthèse dans le MCH d'un gel concentré</u>

On introduit dans le réacteur 0,875 kg de $Nd_2O_3$ de type B, 0,45 litres d'eau, 5,374 kg de DEHPA et 13 litres de méthylcyclohexane. Le milieu réactionnel est agité au moyen des trois mobiles d'agitation et la température du milieu est portée à 75°C en 35 minutes. Une fois le système stabilisé en température, l'eau du milieu réactionnel est éliminée par distillation azéotropique. Après 2 heures, le milieu réactionnel est refroidi à 40°C puis coulé dans un récipient adapté. On obtient ainsi un gel limpide présentant les caractéristiques reportées dans le tableau 2.

<u>Exemple 9- Synthèse dans le CH d'un gel concentré</u>

On introduit dans le réacteur 1,75 kg de $Nd_2O_3$ de type B, 1,5 litres d'eau, 10,6 kg de DEHPA et 33 litres de cyclohexane. Le milieu réactionnel est agité au moyen des trois mobiles d'agitation et la température du milieu est portée à 66°C en 30 minutes. Une fois le système stabilisé en température, l'eau du milieu réactionnel est éliminée par distillation azéotropique. Après 4 heures, le milieu réactionnel est refroidi à 30°C puis coulé dans un récipient adapté. On obtient ainsi un gel limpide présentant les caractéristiques reportées dans le tableau 2.

Tableau 2 :

| | Ex 5 | Ex 6 | Ex 7 | Ex 8 | Ex 9 |
|---|---|---|---|---|---|
| Stoechiométrie DEHPA/Nd initiale | 3,18 | 3,16 | 3,17 | 3,20 | 3,16 |
| Solvant | Méthylcyclohexane | Cyclohexane | Pentane | Méthylcyclohexane | Cyclohexane |
| Durée totale de la synthèse en minutes | 155 | 230 | 375 | 155 | 270 |
| Aspect du gel | Translucide | Translucide | Translucide | Translucide | Translucide |
| Présence de solide | non | non | non | non | non |
| Taux d'insolubles | 0 | 0 | 0 | 0 | 0 |
| % Nd | 2,19% | 2,50% | 2,61% | 4,14% | 4,4% |
| % P | 1,55% | 1,71% | 1,99% | 3,03% | 3,3% |
| % acide libre | 1,90% | 2,61% | 2,07% | 3,66% | 3,50% |
| % $H_2O$ en ppm | 450 | 34 | 424 | 800 | 45 |
| Viscosité en cP | 59 000 | - | 9000 | 1600 | - |

**II PREPARATION DE SYSTEMES CATALYTIQUES**

**Synthèse de systèmes catalytiques «témoin» et selon l'invention à partir de ces sels:**

En vue de l'obtention de chaque système catalytique, on verse le sel correspondant de néodyme à l'état de gel dans un réacteur préalablement nettoyé de ses impuretés. Le gel témoin est préparé selon le brevet US 6,767,927. Les gels conformes à l'invention sont ceux préparés dans les exemples précédents.

- Première étape de « préformation » de chaque système catalytique :

On introduit ensuite du butadiène dans le réacteur à une température de 30°C, ainsi qu'une certaine quantité du solvant hydrocarboné inerte de la synthèse du sel de néodyme.

- Deuxième étape d'alkylation :

On introduit ensuite dans le réacteur de l'hydrure de di-isobutylaluminium (HDiBA) à titre d'agent d'alkylation du sel de néodyme, selon une concentration d'environ 1 M. La durée de l'alkylation est de 15 min. La température de la réaction d'alkylation est égale à 30° C.

- Troisième étape d'halogénation :

On introduit ensuite dans le réacteur du chlorure de diéthylaluminium (CDEA) à titre de donneur d'halogène, selon une concentration d'environ 1 M. La température du milieu réactionnel est portée à 60° C. La durée de l'halogénation est de 70 minutes.

- Quatrième étape de vieillissement :

On procède ensuite à un vieillissement du mélange ainsi obtenu en maintenant cette température de 60° C pendant une durée de 120 min.

On stocke finalement la solution catalytique sous atmosphère d'azote dans un congélateur, à la température de -15° C.

Les rapports molaires des différents constituants (butadiène, agent d'alkylation et donneur d'halogène) par

rapport au sel de néodyme des systèmes catalytiques ainsi préparés sont donnés dans les tableaux qui suivent.

Ces systèmes catalytiques ont ensuite été testés en polymérisation du butadiène et de l'isoprène conformément aux procédés décrits ci-après.

## III. POLYMERISATION DU BUTADIENE ET DE L'ISOPRENE AU MOYEN DES SYSTEMES CATALYTIQUES PREPARES :

Les techniques de caractérisation des polymères sont décrites en Annexe 1.

### 1) Polymérisation du butadiène:

On utilise, à titre de réacteur de polymérisation, une bouteille "Steinie" de 250 ml préalablement lavée et séchée, et équipée de capsules perforées et d'un septum en caoutchouc. Chaque réaction de polymérisation du butadiène est effectuée sous atmosphère inerte (azote).

Pour chaque polymérisation, on introduit 122 ml de méthylcyclohexane dans ladite bouteille à titre de solvant de polymérisation. On fait barboter à l'azote ce méthylcyclohexane pendant 10 minutes pour éliminer les impuretés.

16 ml (10,4 g) de butadiène fraîchement distillé est ensuite introduit dans la bouteille à l'aide d'une seringue.

Une quantité de 582 µmol d'HDiBA pour 100 g de butadiène est ensuite introduite dans la bouteille de manière à nettoyer le milieu réactionnel des impuretés et de manière à jouer le rôle d'agent de transfert pour le contrôle des masses molaires du polymère.

On utilise un rapport massique "solvant de polymérisation (méthylcyclohexane) / monomère (butadiène)" de 9.

Le catalyseur [Nd / Butadiène / HDiBA / CDEA] préparé précédemment est introduit dans la bouteille à hauteur de 192 µmol de néodyme pour 100 g de butadiène. Il s'agit de la valeur de la base catalytique.

La bouteille est ensuite placée dans un bain thermostaté à la température souhaitée de 90°C.

On utilise 1 ml de méthanol pour stopper les réactions de polymérisation.

On extrait ensuite les polybutadiènes des solutions polymériques ainsi obtenues, soit par stripping à la vapeur et un séchage sur rouleaux à 100°C ou un séchage en étuve à 60°C sous vide avec un léger courant d'azote, soit par dévolatilisation en faisant le vide sous azote à 60° C.

Les paramètres-clés sont la cinétique de polymérisation et la distribution des masses molaires des élastomères obtenus, ainsi que le taux d'unités 1,4-cis. La mesure du taux de conversion du monomère en polymère en fonction du temps de réaction est utilisée pour décrire la cinétique de polymérisation. La caractérisation de la macrostructure des polymères est réalisée par la méthode SEC. La caractérisation de la microstructure des polymères est réalisée par la méthode "proche infrarouge" (NIR).

Les résultats des essais sont résumés dans le tableau 3 ci-après:

Tableau 3:

| ESSAI | Rapports molaires du système catalytique Nd/Bd/HDiBA/ CDEA | Conversion en % (temps en min.) | $\eta_{inh}$ (dl/g) | Mn en g/mol (IP) | Taux 1,4-cis |
|---|---|---|---|---|---|
| Avec le sel de Nd de Ex. 3 | 1 / 30 / 3 / 2,9 | 98 (30) | 2,32 | 130 000 (1,85) | 99,0 |
| Avec le sel de Nd de Ex. 4 | 1 / 30 / 3 / 2,9 | 100 (30) | 2,39 | 128000 (1,90) | 98,0 |
| Avec le sel de Nd de Ex. 5 | 1 / 30 / 3,5 / 2,9 | 100 (30) | 2,41 | 131 000 (1,85) | 98,0 |
| Avec le sel de Nd de Ex. 6 | 1 / 30 / 3,5 / 2,9 | 98 (30) | 2,23 | 133 000 (1,70) | 98,0 |
| Avec le sel de Nd de Ex. 8 | 1 / 30 / 3,5/ 2,9 | 99 (30) | 2,82 | 152000 (1,80) | 99,0 |
| Avec le sel de Nd de Ex. 9 | 1 / 30 / 3,5/ 2,9 | 100 (30) | 2,63 | 143 000 (1,75) 137 000 | 98,0 |
| Témoin « 3,5 » | 1 / 30 / 3,5 / 2,9 | 100 (30) | 2,55 | (1,90) 153 000 | 98,0 |
| Témoin « 3 » | 1 / 30 / 3/ 2,9 | 99 (30) | 2,80 | (1,90) | 98,0 |

Par ailleurs, l'activité catalytique de ces systèmes catalytiques a également été évaluée.

Les résultats des essais montrent que les gels préparés par voie directe selon le procédé de synthèse de l'invention sont utilisables tel quel pour la préparation de catalyseurs efficaces pour la polymérisation stéréospécifique 1,4-cis du butadiène.

Les cinétiques de polymérisations sont équivalentes voir légèrement supérieures à celles observées avec un catalyseur préparé à partir d'un gel commercial témoin. Les distributions de masses moléculaires sont étroites, comme en témoignent les valeurs de l'indice de polydispersité, toutes inférieures à 2. Les polybutadiènes formés présentent un taux de motifs 1,4-cis élevé et supérieur à 97%.

**2) Polymérisation de l'isoprène:**

On utilise, à titre de réacteur de polymérisation, une bouteille "Steinie" de 250 ml préalablement lavée et séchée, et équipée de capsules perforées et d'un septum en caoutchouc. Chaque réaction de polymérisation du butadiène est effectuée sous atmosphère inerte (azote).

Pour chaque polymérisation, on introduit 122 ml méthylcyclohexane dans ladite bouteille à titre de solvant de polymérisation. On fait barboter à l'azote ce méthylcyclohexane pendant 10 min, pour éliminer les impuretés.

15 ml (10,2 g) d'isoprène fraîchement distillé est ensuite introduit dans la bouteille à l'aide d'une seringue.

On utilise un rapport massique "solvant de polymérisation (méthylcyclohexane) / monomère (isoprène)" de 9.

Le catalyseur [Nd / Butadiène / HDiBA / CDEA] obtenu précédemment est introduit dans la bouteille à hauteur de 431 $\mu$mol de néodyme pour 100 g d'isoprène.

La bouteille est ensuite placée dans un bain thermostaté à la température souhaitée de 50°C.

On utilise 1 ml de méthanol pour stopper les réactions de polymérisation.

On extrait ensuite les polyisoprènes des solutions polymériques ainsi obtenues par séchage en étuve à 60°C sous vide avec un léger courant d'azote.

Les paramètres-clés sont la cinétique de polymérisation et la distribution des masses moléculaires des élastomères obtenus, ainsi que le taux d'unités 1,4-cis. La mesure du taux de conversion du monomère en polymère en fonction du temps de réaction est utilisée pour décrire la cinétique de polymérisation.

Les résultats des essais sont résumés dans le tableau 4 ci-après:

Tableau 4

| ESSAI | Rapports molaires du système catalytique NdBd/ HDiBA/CDEA | Conversion en % (temps en min.) | $\eta_{inh}$ (dl/g) | Mn en g/mol (IP) | Taux 1,4-cis |
|---|---|---|---|---|---|
| Avec le sel de Nd de Ex. 3 | 1 / 30 / 2 / 2,6 | 100 (90) | 3,92 | 408 000 (2,50) | 97,2 |
| Avec le sel de Nd de Ex. 34 | 1 / 30 / 2 / 2,6 | 95 (90) | 4,44 | 479 000 (2,65) | 97,2 |
| Témoin | 1 / 30 / 2 / 2,6 | 99 (90) | 4,31 | 454 000 (2,55) | 97,4 |

Par ailleurs, l'activité catalytique de ces systèmes catalytiques a également été évaluée.

Les résultats de ces essais montrent que les gels préparés par voie directe selon le procédé de synthèse selon l'invention sont utilisables tel quel pour la préparation de catalyseurs efficaces pour la polymérisation stéréospécifique 1,4-cis de l'isoprène.

Les cinétiques de polymérisations sont équivalentes à celles observées avec un catalyseur préparé à partir d'un gel commercial témoin. Les distributions de masses moléculaires sont étroites, comme en témoignent les valeurs de l'indice de polydispersité. Les polymères formés présentent un taux de motifs 1,4-cis élevé et supérieur à 97%.

Il ressort de ces essais que les gels préparés selon le procédé de synthèse par voie directe de l'invention sont utilisables pour la polymérisation stéréospécifique 1,4-cis des diènes conjugués, avec des activités catalytiques comparables à celles observées généralement avec ce type de gel. Les élastomères obtenus présentent un taux d'unités 1,4-cis élevé et une macrostructure possédant une distribution de masses moléculaires étroites.

**ANNEXE 1**

**Mesure de la viscosité inhérente**

La viscosité inhérente ηinh est mesurée à 25°C à 0,1 g/dL dans le toluène et caractérise la macrostructure de l'élastomère.

La viscosité est calculée par la formule

$$\eta = \frac{1}{C} \times \ln\left(\frac{T_1}{T_2}\right)$$

avec η la viscosité inhérente (dL/g), C la concentration en polymère dans le toluène (g/dL), T1 le temps d'écoulement de la solution de polymère (s) et T2 le temps d'écoulement du toluène (s))

**Caractérisation de la macrostructure par SEC**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofuranne à une concentration d'environ 1 g/l.

c) Analyse SEC:

Cas c1) L'appareillage utilisé est un chromatographe « WATERS alliance ». Le solvant d'élution est le tétrahydrofuranne, le débit de 1 ml/min., la température du système de 35° C et la durée d'analyse de 90 min. On utilise un jeu de deux colonnes de dénomination commerciale « STYRAGEL HT6E ».

Le volume injecté de la solution de l'échantillon de polymère est 100 μl. Le détecteur est un réfractomètre différentiel « WATERS 2140 » et le logiciel d'exploitation des données chromatographiques est le système « WATERS MILLENIUM ».

Cas c2) L'appareillage utilisé est un chromatograploe « WATERS, modèle 150C ». Le solvant d'élution est le tétrahydrofuranne, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 μl. Le détecteur est un réfractomètre différentiel « WATERS modèle RI32X » et le logiciel d'exploitation des données chromatographiques est le système « WATERS MILLENIUM » (version 3.00).

**Caractérisation de la microstructure (taux de 1,4-cis) par proche infrarouge (NIR)**

On a utilisé la technique de dosage appelée « proche infrarouge » (NIR). Il s'agit d'une méthode indirecte faisant appel à des élastomères « témoin » dont la microstructure a été mesurée par la technique de RMN13C. On utilise la relation quantitative (loi de Beer-Lambert) existant entre la répartition des monomères dans un élastomère et la forme du spectre NIR de celui-ci. Cette technique est mise en oeuvre en deux étapes :

1) Etalonnage :

On procède à l'acquisition des spectres respectifs des élastomères « témoin ». On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

(1) P. GELADI et B. R. KOWALSKI, "Partial Least Squares regression : a tutorial", Analytica Chimica Acta, vol. 185, 1-17 (1986).

(2) M. TENENHAUS, "La régression PLS - Théorie et pratique", Paris, Editions Technip (1998).

2) Mesure :

On procède à un enregistrement du spectre de l'échantillon. Puis on réalise le calcul de la microstructure.

## Revendications

1. Procédé de synthèse d'un organophosphate de terre rare **caractérisé en ce qu'**il comprend :

   - la dispersion sous fort cisaillement, dans un mélangeur disposant de mobiles d'agitation, d'un oxyde de terre rare dans un milieu réactionnel biphasique comprenant au moins un acide organophophorique et un mélange d'au moins deux solvants non-miscibles, et, simultanément ou séquentiellement,
   - la réaction de l'oxyde de terre rare avec l'acide organophophorique,

   le milieu réactionnel étant animé lors de la dispersion d'un taux de cisaillement supérieur à 200 $s^{-1}$ exprimé par la formule

$$\Gamma_{moyen} = k\ N$$

   dans laquelle k est une constante allant de 10 à 13 et N est la vitesse des mobiles d'agitation ,
   par une vitesse périphérique en bout de pale supérieure à 4 $m.s^{-1}$, exprimée par l'expression :

$$V_{périph} = \pi\ N\ D$$

   dans laquelle D est le diamètre des mobiles d'agitation exprimé en mètre et N leur vitesse de rotation exprimée en $s^{-1}$.

2. Procédé de synthèse d'un organophosphate de terre rare selon la revendication 1, **caractérisé en ce que** le milieu réactionnel est animé, lors de la dispersion, d'un taux de cisaillement compris entre 200 $s^{-1}$ et 20 000 $s^{-1}$

3. Procédé de synthèse d'un organophosphate de terre rare selon la revendication 1 ou 2, **caractérisé en ce que** la vitesse périphérique en bout de pale est comprise entre 10 $m.s^{-1}$ et 40 $m.s^{-1}$.

4. Procédé de synthèse d'un organophosphate de terre rare selon l'une des revendications précédentes, **caractérisé en ce que** l'oxyde de terre rare présente un degré d'hydratation supérieur ou égal à 25%.

5. Procédé de synthèse d'un organophosphate de terre rare selon l'une quelconque des revendications précédentes, **caractérisé en ce que** l'acide organophosphorique est choisi parmi les diesters d'acide phosphorique de formule générale (RO)(R'O)PO(OH), dans laquelle R est un radical n-butyle, isobutyle, pentyle, amyle, isopentyle, 2,2-diméthylhexyle, 2-éthylhexyle, 1-éthylhexyle, tolyle, nonaphenoxyle et R'est un radical n-butyle, isobutyle, pentyle, amyle, isopentyle, 2,2-diméthylhexyle, 2- éthylhexyle, 1-éthylhexyle, tolyle, nonaphenoxyle; les monoesters d'acide phosphorique de formule générale (RO) $PO(OH)_2$ dans laquelle
   R est un radical n-butyle, isobutyle, pentyle, amyle, isopentyle, 2,2-diméthylhexyle, 2-éthylhexyle, 1-éthylhexyle, tolyle, nonaphenoxyle; les phosphonates de formule générale (RO)R'P(O) ou RP(O) $(OH)_2$ dans lesquelles R est un radical n-butyle, isobutyle, pentyle, amyle, isopentyle, 2,2-diméthylhexyle, 2- éthylhexyle, 1-éthylhexyle, tolyle, nonaphenoxyle; les phosphinates de formule générale R(R')P(O)OH ou R(H)P(O)OH dans lesquelles R est un radical n-butyle, isobutyle, pentyle, amyle, isopentyle, 2,2-diméthylhexyle, 2- éthylhexyle, 1-éthylhexyle, tolyle, nonaphenoxyle; et leurs mélanges

6. Procédé de synthèse d'un organophosphate de terre rare selon l'une quelconque des revendications précédentes, **caractérisé en ce que** le mélange de solvants non miscibles comprend au moins un solvant hydrocarboné inerte et de l'eau.

7. Procédé de synthèse d'un organophosphate de terre rare selon la revendication 6, **caractérisé en ce que** le solvant hydrocarboné inerte est le cyclohexane ou le méthylcyclohexane ou leur mélange.

8. Procédé de synthèse d'un organophosphate de terre rare selon la revendication 6 ou 7, **caractérisé en ce que** le rapport en volume de l'eau de synthèse par rapport au solvant hydrocarboné inerte est strictement supérieur à 0 et strictement inférieur à 1

9. Procédé de synthèse d'un organophosphate de terre rare selon l'une quelconque des revendications précédentes, **caractérisé en ce qu'**il se déroule dans sa totalité au sein d'un seul réacteur.

10. Procédé de synthèse d'un organophosphate de terre rare selon l'une quelconque des revendications 1 à 8, **caractérisé en ce qu'**il est mis en oeuvre successivement dans deux réacteurs différents, dans un premier réacteur étant adapté pour la dispersion sous fort cisaillement de l'oxyde de terre rare dans le milieu réactionnel puis dans un deuxième réacteur, dans lequel le mélange réactionnel obtenu dans le premier réacteur est transvasé, pour poursuivre le procédé.

11. Procédé de synthèse d'un organophosphate de terre rare selon l'une quelconque des revendications précédentes, **caractérisé en ce que** il comprend, après l'étape de réaction de l'oxyde de terre rare avec l'acide organophophorique, une étape d'élimination de l'eau par distillation azéotropique.

12. Procédé de synthèse d'un organophosphate de terre rare selon l'une quelconque des revendications précédentes, **caractérisé en ce que** il comprend l'adjonction au milieu réactionnel, avant, pendant et/ou après les étapes de dispersion de l'oxyde de terre rare et de sa réaction avec l'acide organophophorique, d'un agent fluidifiant.

13. Procédé de synthèse d'un organophosphate de terre rare selon l'une quelconque des revendications précédentes, **caractérisé en ce que**, une fois la synthèse de l'organophosphate de terre rare réalisée, le procédé ne comprend pas d'étape subséquente de traitement des effluents.

14. Procédé de synthèse d'un organophosphate de terre rare selon l'une quelconque des revendications précédentes, **caractérisé en ce que**, une fois la synthèse de l'organophosphate de terre rare réalisée, les effluents de la réaction contenant éventuellement de l'acide organophosphorique non réagi sont recyclés en amont du procédé

## Patentansprüche

1. Verfahren zur Synthese eines Organophosphats einer seltenen Erde, **dadurch gekennzeichnet, dass** es Folgendes aufweist:

    - die Dispersion unter starkem Rühren und Zerkleinern in einer Mischanlage, die über Rührelemente verfügt, eines Oxids seltener Erde in einem Zweiphasenreaktionssystem, das mindestens eine Organophosphorsäure und eine Mischung von mindestens zwei nichtmischbaren Lösungsmitteln aufweist und gleichzeitig oder sequenziell,
    - die Reaktion des Oxids seltener Erde mit der Organophosphorsäure,

    wobei das Reaktionssystem bei der Dispersion mit einer Rühr-Zerkleinerungsgeschwindigkeit größer als 200 $s^{-1}$ bewegt wird, ausgedrückt durch die Formel

$$\Gamma_{\text{mittel}} = k\ N$$

in der k eine Konstante ist, die von 10 bis 13 reicht, und N die Geschwindigkeit der Rührelemente ist, durch eine Blattspitzenumfangsgeschwindigkeit größer als 4 $m.s^{-1}$, ausgedrückt durch den Ausdruck

$$V_{Umfang} = \pi \ N \ D$$

in dem D der Durchmesser der Rührelemente ausgedrückt in Meter und N ihre Drehzahl ausgedrückt in $s^{-1}$ ist.

2. Verfahren zur Synthese eines Organophosphats seltener Erde nach Anspruch 1, **dadurch gekennzeichnet, dass** das Reaktionssystem während des Dispergierens mit einer Rühr-Zerkleinerungsgeschwindigkeit zwischen 200 $s^{-1}$ und 20 000 $s^{-1}$ bewegt wird.

3. Verfahren zur Synthese eines Organophosphats seltener Erde nach Anspruch 1 oder 2, **dadurch gekennzeichnet, dass** die Blattspitzenumfangsgeschwindigkeit zwischen 10 $m.s^{-1}$ und 40 $m.s^{-1}$ liegt.

4. Verfahren zur Synthese eines Organophosphats seltener Erde nach einem der vorhergehenden Ansprüche, **dadurch gekennzeichnet, dass** das Oxid seltener Erde einen Hydratationsgrad aufweist, der größer oder gleich 25% ist.

5. Verfahren zur Synthese eines Organophosphats seltener Erde nach einem der vorhergehenden Ansprüche, **dadurch gekennzeichnet, dass** die Organophosphorsäure ausgewählt ist aus Phosphorsäurediestern der allgemeinen Formel (RO)(R'O)PO(OH), worin R für einen n-Butyl-, Isobutyl-, Pentyl-, Amyl-, Isopentyl-, 2,2-Dimethylhexyl-, 2-Ethylhexyl-, 1-Ethylhexyl-, Tolyl- oder Nonaphenoxylrest steht und R' für einen n-Butyl-, Isobutyl-, Pentyl-, Amyl-, Isopentyl-, 2,2-Dimethylhexyl-, 2-Ethylhexyl-, 1-Ethylhexyl-, Tolyl- oder Nonaphenoxylrest steht; Phosphorsäuremonoestern der allgemeinen Formel $(RO)PO(OH)_2$, worin R für einen n-Butyl-, Isobutyl-, Pentyl-, Amyl-, Isopentyl-, 2,2-Dimethylhexyl-, 2-Ethylhexyl-, 1-Ethylhexyl-, Tolyl- oder Nonaphenoxylrest steht; Phosphonaten der allgemeinen Formel (RO)R'P(O) oder $RP(O)(OH)_2$, worin R für einen n-Butyl-, Isobutyl-, Pentyl-, Amyl-, Isopentyl-, 2,2-Dimethylhexyl-, 2-Ethylhexyl-, 1-Ethylhexyl-, Tolyl- oder Nonaphenoxylrest steht; Phosphinaten der allgemeinen Formel R(R')P(O)OH oder R(H)P(O)OH, worin R für einen n-Butyl-, Isobutyl-, Pentyl-, Amyl-, Isopentyl-, 2,2-Dimethylhexyl-, 2-Ethylhexyl-, 1-Ethylhexyl-, Tolyl- oder Nonaphenoxylrest steht; und ihren Gemischen.

6. Verfahren zur Synthese eines Organophosphats seltener Erde nach einem der vorhergehenden Ansprüche, **dadurch gekennzeichnet, dass** die Mischung von nichtmischbaren Lösungsmitteln mindestens ein inertes Kohlenwasserstofflösungsmittel und Wasser umfasst.

7. Verfahren zur Synthese eines Organophosphats seltener Erde nach Anspruch 6, **dadurch gekennzeichnet, dass** es sich bei dem inerten Kohlenwasserstofflösungsmittel um Cyclohexan oder Methylcyclohexan oder ihr Gemisch handelt.

8. Verfahren zur Synthese eines Organophosphats seltener Erde nach Anspruch 6 oder 7, **dadurch gekennzeichnet, dass** das Verhältnis Synthesewasservolumen zu inertem Kohlenwasserstofflösungsmittel strikt größer als 0 und strikt kleiner als 1 ist.

9. Verfahren zur Synthese eines Organophosphats seltener Erde nach einem der vorhergehenden Ansprüche, **dadurch gekennzeichnet, dass** es vollständig innerhalb eines einzigen Reaktors abgewickelt wird.

10. Verfahren zur Synthese eines Organophosphats seltener Erde nach einem der Ansprüche 1 bis 8, **dadurch gekennzeichnet, dass** es nacheinander in zwei unterschiedlichen Reaktoren ausgeführt wird, in einem ersten Reaktor, der für die Dispersion unter starkem Rühren und Zerkleinern des Oxids seltener Erde in dem Reaktionssystem geeignet ist, dann in einem zweiten Reaktor, in den das im ersten Reaktor erzielte Reaktionsgemisch umgefüllt wird, um das Verfahren fortzusetzen.

11. Verfahren zur Synthese eines Organophosphats seltener Erde nach einem der vorhergehenden Ansprüche, **dadurch gekennzeichnet, dass** es nach dem Reaktionsschritt des Oxids seltener Erde mit der Organophosphorsäure einen Eliminierungsschritt des Wassers durch azeotrope Destillation aufweist.

**12.** Verfahren zur Synthese eines Organophosphats seltener Erde nach einem der vorhergehenden Ansprüche, **dadurch gekennzeichnet, dass** es das Hinzufügen eines Fluidisierungsmittels zum Reaktionssystem vor, während und/oder nach den Schritten des Dispergierens des Oxids seltener Erde und der Reaktion des Oxids seltener Erde mit der Organophosphorsäure aufweist.

**13.** Verfahren zur Synthese eines Organophosphats seltener Erde nach einem der vorhergehenden Ansprüche, **dadurch gekennzeichnet, dass** nach dem Durchführen der Synthese des Organophosphats seltener Erde das Verfahren keinen darauf folgenden Abwasseraufbereitungsschritt aufweist.

**14.** Verfahren zur Synthese eines Organophosphats seltener Erde nach einem der vorhergehenden Ansprüche, **dadurch gekennzeichnet, dass** nach dem Ausführen der Synthese des Organophosphats seltener Erde das Abwasser der Reaktion, das eventuell Organophosphorsäure enthält, die nicht reagiert hat, stromaufwärts des Verfahrens recycelt wird.

## Claims

**1.** Process for the synthesis of a rare-earth organophosphate **characterized in that** it comprises:

- the dispersion, under high shear, in a mixer having agitator impellers, of a rare-earth oxide in a two-phase reaction medium comprising at least one organophosphoric acid and a mixture of at least two immiscible solvents and, simultaneously or sequentially,
- the reaction of the rare-earth oxide with the organophosphoric acid,

the reaction medium being driven, during the dispersion, by a shear rate of greater than 200 $s^{-1}$, expressed by the equation:

$$\Gamma_{average} = k\ N$$

in which k is a constant ranging from 10 to 13 and N is the speed of the agitator impellers,
by a blade tip peripheral speed of greater than 4 $m.s^{-1}$, expressed by the equation:

$$V_{periph} = \pi\ N\ D$$

in which D is the diameter of the agitator impellers expressed in metres and N is their rotational speed expressed in $s^{-1}$.

**2.** Process for the synthesis of a rare-earth organophosphate according to Claim 1, **characterized in that** the reaction medium is driven, during the dispersion, by a shear rate between 200 $s^{-1}$ and 20 000 $s^{-1}$.

**3.** Process for the synthesis of a rare-earth organophosphate according to Claim 1 or 2, **characterized in that** the blade tip peripheral speed is between 10 $m.s^{-1}$ and 40 $m.s^{-1}$.

**4.** Process for the synthesis of a rare-earth organophosphate according to one of the preceding claims, **characterized in that** the rare-earth oxide has a degree of hydration greater than or equal to 25%.

**5.** Process for the synthesis of a rare-earth organophosphate according to any one of the preceding claims, **characterized in that** the organophosphoric acid is chosen from phosphoric acid diesters of general formula (RO)(R'O)PO(OH), in which R is an n-butyl, isobutyl, pentyl, amyl, isopentyl, 2,2-dimethylhexyl, 2-ethylhexyl, 1-ethylhexyl, tolyl, nonylphenoxy radical and R' is an n-butyl, isobutyl, pentyl, amyl, isopentyl, 2,2-dimethylhexyl, 2-ethylhexyl, 1-ethylhexyl, tolyl, nonylphenoxy radical; phosphoric acid monoesters of general formula $(RO)PO(OH)_2$ in which R is an n-butyl, isobutyl, pentyl, amyl, isopentyl, 2,2-dimethylhexyl, 2-ethylhexyl, 1-ethylhexyl, tolyl, nonylphenoxy radical; phosphonates of general formula (RO)R'P(O) or $RP(O)(OH)_2$ in which R is an n-butyl, isobutyl, pentyl, amyl, isopentyl, 2,2-dimethylhexyl, 2-ethylhexyl, 1-ethylhexyl, tolyl, nonylphenoxy radical; phosphinates of general formula R(R')P(O)OH or R(H)P(O)OH in which R is an n-butyl, isobutyl, pentyl, amyl, isopentyl, 2,2-dimethylhexyl, 2-ethylhexyl, 1-ethylhexyl, tolyl, nonylphenoxy radical; and mixtures thereof.

6. Process for the synthesis of a rare-earth organophosphate according to any one of the preceding claims, **characterized in that** the mixture of immiscible solvents comprises at least one inert hydrocarbon solvent and water.

7. Process for the synthesis of a rare-earth organophosphate according to Claim 6, **characterized in that** the inert hydrocarbon solvent is cyclohexane or methylcyclohexane or a mixture thereof.

8. Process for the synthesis of a rare-earth organophosphate according to Claim 6 or 7, **characterized in that** the volume ratio of the water of synthesis relative to the inert hydrocarbon solvent is strictly greater than 0 and strictly less than 1.

9. Process for the synthesis of a rare-earth organophosphate according to any one of the preceding claims, **characterized in that** it takes place, in its entirety, within a single reactor.

10. Process for the synthesis of a rare-earth organophosphate according to any one of Claims 1 to 8, **characterized in that** it is carried out successively in two different reactors, in a first reactor that is suitable for the dispersion, under high shear, of the rare-earth oxide in the reaction medium, then in a second reactor, into which the reaction mixture obtained in the first reactor is decanted, in order to continue the process.

11. Process for the synthesis of a rare-earth organophosphate according to any one of the preceding claims, **characterized in that** it comprises, after the step of reacting the rare-earth oxide with the organophosphoric acid, a step of removing water by azeotropic distillation.

12. Process for the synthesis of a rare-earth organophosphate according to any one of the preceding claims, **characterized in that** it comprises the addition to the reaction medium, before, during and/or after the steps of dispersion of the rare-earth oxide and of reacting it with the organophosphoric acid, of a fluidizing agent.

13. Process for the synthesis of a rare-earth organophosphate according to any one of the preceding claims, **characterized in that**, once the synthesis of the rare-earth organophosphate has been carried out, the process does not comprise a subsequent step of treating the effluents.

14. Process for the synthesis of a rare-earth organophosphate according to any one of the preceding claims, **characterized in that**, once the synthesis of the rare-earth organophosphate has been carried out, the effluents of the reaction possibly containing unreacted organophosphoric acid are recycled upstream of the process.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0238635 A
- WO 0238636 A
- WO 03097708 A
- JP 60023406 B
- EP 1509557 B1
- US 6767927 B1
- US 6111082 A
- US 6482906 B1
- US 5220045 A
- EP 0924214 B1
- US 6638918 B
- US 6767927 B


### Littérature non-brevet citée dans la description


- **SUGLOBOV.** DEHP Complexes of Lanthanides (III) and Actinides (III. *Journal of Alloys and Compounds,* 1994, vol. 213/214, 523-527
- **KOROVIN et al.** *Russian Journal of Inorganic Chemistry,* vol. 22 (5), 1977
- **CHEN TIEN et al.** Preparation and characterization of bis(2-ethylhexyl) phosphate(P204) rare earth. *K'o Hsueh T'ung Pao,* 1981, vol. 26 (13), 794-6
- **P. GELADI ; B. R. KOWALSKI.** Partial Least Squares regression : a tutorial. *Analytica Chimica Acta,* 1986, vol. 185, 1-17
- **M. TENENHAUS.** La régression PLS - Théorie et pratique. Paris, Editions Technip, 1998